(19) Europäisches Patentamt / European Patent Office / Office européen des brevets

(11) **EP 3 644 089 B1**

(12) **EUROPEAN PATENT SPECIFICATION**

(45) Date of publication and mention
of the grant of the patent:
**19.10.2022 Bulletin 2022/42**

(51) International Patent Classification (IPC):
**G01S 7/40** *(2006.01)*    **G01S 13/58** *(2006.01)*
**G01S 13/87** *(2006.01)*    **G01S 13/933** *(2020.01)*
**G01S 7/00** *(2006.01)*    **G01S 13/00** *(2006.01)*

(21) Application number: **18820704.7**

(22) Date of filing: **10.04.2018**

(52) Cooperative Patent Classification (CPC):
**G01S 13/87; G01S 7/003; G01S 13/003;
G01S 13/933;** G01S 2013/916; G01S 2013/9316

(86) International application number:
**PCT/JP2018/015054**

(87) International publication number:
**WO 2018/235397 (27.12.2018 Gazette 2018/52)**

(54) **RADAR DEVICE AND RADAR SYSTEM**

RADARGERÄT UND RADARSYSTEM

DISPOSITIF RADAR ET SYSTÈME RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2017 JP 2017119556**

(43) Date of publication of application:
**29.04.2020 Bulletin 2020/18**

(73) Proprietor: **Hitachi Kokusai Electric Inc.**
**Tokyo 105-8039 (JP)**

(72) Inventor: **SATO, Yosuke**
**Kodaira-shi**
**Tokyo 187-8511 (JP)**

(74) Representative: **J A Kemp LLP**
**80 Turnmill Street**
**London EC1M 5QU (GB)**

(56) References cited:
WO-A2-02/101411    JP-A- 2001 208 841
JP-A- 2004 170 165    JP-A- 2008 026 095
JP-A- 2015 152 334    US-A- 5 629 691

• ZHANG JIN ET AL: "Design Procedures and
Considerations of FOD Detection
Millimeter-Wave FMCW Radar", 2013 IEEE
INTERNATIONAL CONFERENCE ON GREEN
COMPUTING AND COMMUNICATIONS AND IEEE
INTERNET OF THINGS AND IEEE CYBER,
PHYSICAL AND SOCIAL COMPUTING, IEEE, 20
August 2013 (2013-08-20), pages 1612-1617,
XP032530706, DOI:
10.1109/GREENCOM-ITHINGS-CPSCOM.2013.29
2 [retrieved on 2013-12-11]
• FUTATSUMORI SHUNICHI ET AL: "Range
resolution evaluation of optically-connected 96
GHz wideband frequency-modulated continuous
wave millimeter-wave radar at airport runway",
2016 IEEE INTERNATIONAL TOPICAL MEETING
ON MICROWAVE PHOTONICS (MWP), IEEE, 31
October 2016 (2016-10-31), pages 47-50,
XP033035712, DOI: 10.1109/MWP.2016.7791282
[retrieved on 2016-12-19]

## Description

TECHNICAL FIELD

The present invention relates to a radar device for detecting an object that exists within a predetermined range on the basis of the results of reception of a reflected wave in response to a transmitted wave.

BACKGROUND ART

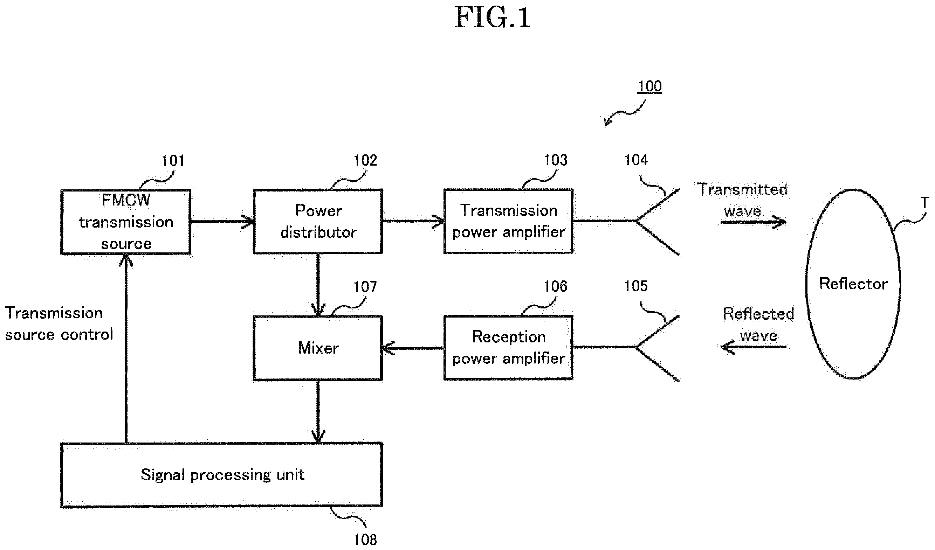

In order to detect and smoothly remove a foreign object that has been dropped onto an airport runway, a radar device for detecting an object that exists within a predetermined range on the basis of the results of reception of a reflected wave in response to a transmitted wave has been actively used. The conventional radar devices using microwaves or a millimeter waveband include an FMCW (frequency modulated continuous wave) radar device having the structure as shown in FIG. 1.

The radar device 100 in FIG. 1 allows a transmission power amplifier 103 to amplify the frequency modulated radar signal from an FMCW transmission source 101, and transmits the radar signal from a transmitting antenna 104. In the case where an object T (reflector) exists within the detection range of the radar device 100, the transmitted wave from the radar device 100 is reflected from the object T. The reflected wave from the object T is received by a receiving antenna 105 and mixed with the radar signal component transmitted from a power distributor 102 by means of a mixer 107 so as to be converted to an IF signal. The IF signal outputted from the mixer 107 is A/D converted and signal processed in a signal processing unit 108, and as a result, the radar detection results including the reception power reflected from the object T (reflected wave power), the distance to the object T and the velocity in the case where the object T is moving (relative velocity with respect to the radar device 100) are gained.

Various inventions that relate to such a radar device have been proposed.

For example, WO2017/018021A1 discloses an invention according to which a millimeter wave radar is installed on a moving body, and the distance to the target location is measured on the basis of the distance between a first reflector and a second reflector and the results of reception of the reflected waves from these reflectors.

WO 02/101411 A2 discloses an inspection system.

SUMMARY OF THE INVENTION

TECHNICAL PROBLEM

The reflected reception power is determined by the radar cross-section (RCS) of the object that reflects the radar signal and the distance. Therefore, in the case where an object having a large RCS (for example, an airplane) exists in proximity of the antenna of the radar device, an excessive reflected reception power is inputted into the receiving antenna of the radar device, which may damage the receiving circuit.

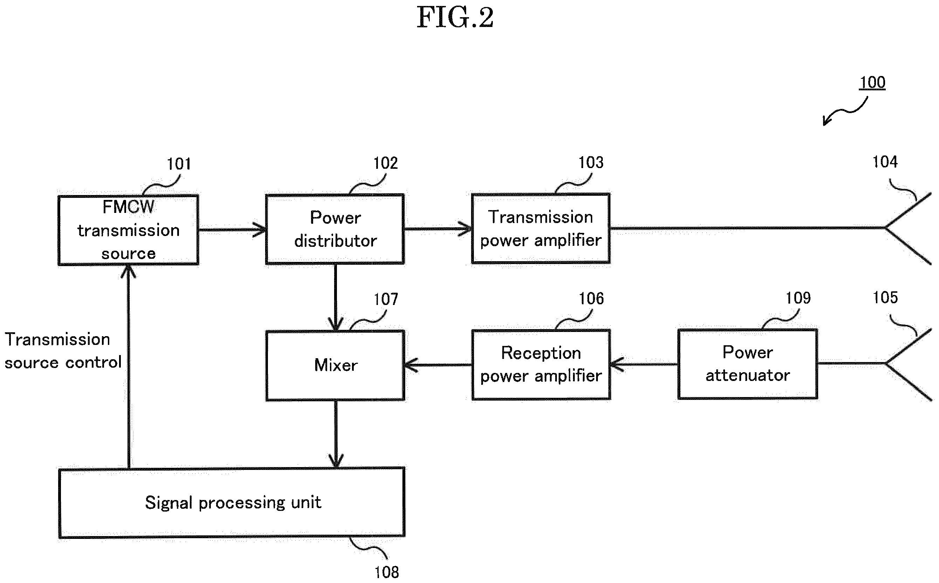

FIG. 2 shows an example of a technique that prevents an excessive power from being inputted into the receiving circuit where a power attenuator 109 is arranged in the front stage before the receiver so that the power attenuator 109 can be operated when an excessive power is inputted so as to protect the reception power amplifier 106 in the rear stage. However, the receiver noise figure increases by the insertion loss of the power attenuator, which deteriorates the detection sensitivity of the entire reception system. In particular, the insertion loss of the power attenuator tends to increase in a high-frequency band such as a millimeter waveband, where an increase in the receiver noise figure cannot be avoided. There is also a risk of not being able to protect the receiving circuit by arranging a power attenuator depending on the factors such as the transmission power, the distance between the reflector and the receiving antenna, and the size of the reflector.

The present invention is provided in view of the above-described conventional states, and an object thereof is to propose a technology with which it is possible to protect the receiving circuit of a radar device from the input of an excessive reflected reception power.

SOLUTION TO PROBLEM

According to the present invention there is provided a radar system as defined in claim 1.

The radar system according to the present invention has a plurality of radar devices for detecting an object that exists within a predetermined range on the basis of the results of reception of a reflected wave in response to a transmitted wave, and the radar system is provided with: a determination unit which determines whether or not the object is a moving body on the basis of the results of reception by at least any of the radar devices; and a controller which controls as a target a radar device that is installed in the moving direction of the object so that the radar operation is temporarily stopped in the case where the determination unit has determined that the object is a moving body.

This configuration allows the plurality of radar devices to work together so that the radar operation can be automatically stopped temporarily as a moving body approaches, and therefore, the receiving circuit of a radar device can be protected from the input of an excessive reflected reception power.

This configuration allows the radar device to solely and automatically stop the radar operation temporarily as a moving body approaches, and therefore, the receiving circuit of the radar device can be protected from the input of an excessive reflected reception power.

In addition, the plurality of radar devices includes a moving body detection radar device that is superior to other radar devices in terms of the power withstanding performance so that the determination unit and the controller can carry out a process by using the results of reception by the moving body detection radar device.

Here, the examples of the configuration may include a configuration where the controller controls the target radar device so that the radar operation is temporarily stopped on the basis of the positional relationship between the object and the target radar device.

Alternatively, the configuration may allow a control device which is connected to the plurality of radar devices in a communicable manner to be provided with the determination unit and the controller, or the configuration may allow the radar devices to be connected to each other in a communicable manner and to be respectively provided with the determination unit and the controller where each of the plurality of radar devices controls itself so that the radar operation can be temporarily stopped on the basis of the results of reception by another radar device.

It is preferable for the moving body detection radar device to be installed on the upstream side of the other radar devices along the route through which the object is assumed to move.

ADVANTAGEOUS EFFECTS OF THE INVENTION

The present invention makes it possible to protect the receiving circuit of a radar device from the input of an excessive reflected reception power. The following Examples 1 and 2 and the related figures are not according to the invention and are present for illustration purposes only.

BRIEF DESCRIPTION OF DRAWINGS

FIG. 1 is a diagram showing an example of the configuration of the radar device according to the prior art;
FIG. 2 is a diagram showing another example of the configuration of the radar device according to the prior art;
FIG. 3 is a diagram showing an example of the configuration of a radar device;
FIG. 4 is a diagram illustrating the radar stoppage control according to Example 1;
FIG. 5A is a graph showing the change of the reflected reception power over time according to Example 1;
FIG. 5B is a graph showing the change of the distance to the object over time according to Example 1;
FIG. 6 is a diagram illustrating the radar stoppage control according to Example 2;
FIG. 7A is a graph showing the change of the reflected reception power over time according to Example 2;
FIG. 7B is a graph showing the change of the distance to the object over time according to Example 2;
FIG. 8 is a diagram illustrating the calculation of the coordinates of an object according to Example 2;
FIG. 9 is a diagram illustrating the location of an object after radar rotation according to Example 2;
FIG. 10 is a diagram illustrating the arrangement of the radar devices according to Example 3;
FIG. 11 is a diagram illustrating the detection of an object by means of the radar devices according to Example 3;
FIG. 12 is a diagram showing an example of the configuration of the radar system according to Example 3;
FIG. 13 is a diagram illustrating the radar stoppage control according to Example 3;
FIG. 14 is a diagram illustrating the radar stoppage control according to Example 3;
FIG. 15 is a diagram illustrating the radar stoppage control according to Example 3;
FIG. 16 is a diagram illustrating the radar stoppage control according to Example 3;
FIG. 17 is a diagram illustrating the radar stoppage control according to Example 3;
FIG. 18 is a diagram showing the arrangement of the radars in the radar system according to Example 4 as viewed diagonally from the top; and
FIG. 19 is a diagram showing the arrangement of the radars in the radar system according to Example 4 as viewed in the horizontal direction.

DESCRIPTION OF EMBODIMENTS

The radar system and the radar devices of the radar system according to one embodiment of the present invention are described in reference to the drawings. Here, it is assumed that radar devices for detecting an object that exists within a predetermined range on the basis of the results of reception of a reflected wave in response to a transmitted wave are installed toward a runway of an airport.

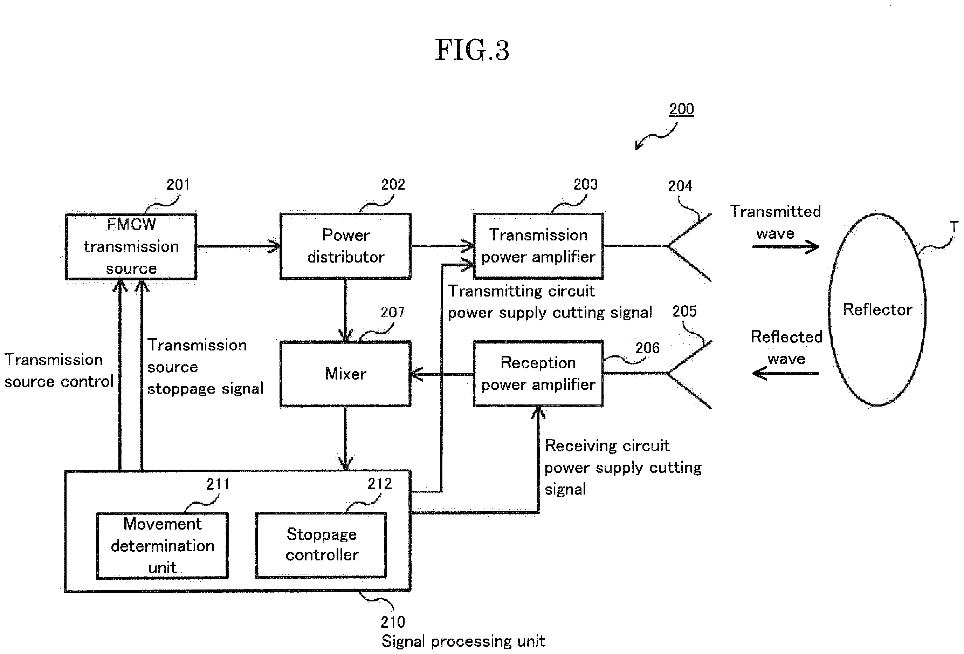

FIG. 3 shows an example of the configuration of a radar device. The radar device 200 is an FMCW radar device that is provided with an FMCW transmission source 201, a power distributor 202, a transmission power amplifier 203, a transmitting antenna 204, a receiving antenna 205, a reception power amplifier 206, a mixer 207 and a signal processing unit 210.

The radar device 200 allows the transmission power amplifier 203 to amplify the frequency modulated radar signal from the FMCW transmission source 201, and transmits the radar signal from the transmitting antenna 204. In the case where an object T (reflector) exists within the detection range of the radar device 200, the transmitted wave from the radar device 200 is reflected from the object T. The reflected wave from the object T is received by the receiving antenna 205 and mixed with the transmitted radar signal component from the power distributor 202 by means of the mixer 207 so as to be converted to an IF signal. The IF signal outputted from the mixer 207 is A/D converted and signal processed in the signal processing unit 210, and as a result, the radar detection results including the reflected reception power from the object T (the reception power of the reflected wave), the distance to the object T and the velocity in the case where the object T is moving (the relative velocity to the radar device 200) are gained.

In addition, the radar device 200 has such a function as to protect the receiving circuit from the input of an excessive reflected reception power. That is to say, the radar device 200 temporarily stops the radar operation in the case where it is determined that the object is a moving body on the basis of a chronological change in a state of the radar detection results. More preferably, the radar device 200 estimates in advance that an object having a large reflected reception power (an airplane is assumed in the present embodiment) is approaching within such a distance that there is a risk of the reception power exceeding the standard reception power value of the receiving circuit, and temporarily stops the radar operation in the case where it is expected that the distance between the object having a large reflected reception power and the radar device will become shorter.

In order to implement such a function, the signal processing unit 210 in the radar device 200 is provided with a movement determination unit 211 and a stoppage controller 212.

The movement determination unit 211 determines whether or not the object T that has been detected within the detection range of the radar device 200 is a moving body on the basis of the radar detection results gained by carrying out a signal process on the received reflected wave. In the case where it is determined that the object T is moving, for example, the object T is determined to be a moving body. Alternatively, the moving velocity of the object T is compared with the preset reference velocity, and when the moving velocity is the reference velocity or greater, it is determined that the object T is a moving body, or otherwise, it is determined that the object T is not a moving body.

The stoppage controller 212 controls the radar device 200 so that the radar operation is temporarily stopped in the case where the object T is determined to be a moving body. The radar operation of the radar device 200 is stopped, for example, at the point in time when the object T is determined to be a moving body or at the point in time when the reflected reception power exceeds the preset threshold value. In addition, the radar operation of the radar device 200 is resumed, for example, at the point in time when a preset period of time has elapsed after the stoppage of the radar operation or at the point in time when the period of time that has been calculated on the basis of the moving velocity of the object T has elapsed.

The control for stopping the radar operation is possible by issuing a radar operation stoppage signal from the signal processing unit 210. As an example of the radar operation stoppage signal, a transmission source stoppage signal for instructing the stoppage of the output from the FMCW transmission source 201, a transmitting circuit power supply cutting signal for instructing the cutting off of the power supply for operating the transmission power amplifier 203, and a receiving circuit power supply cutting signal for instructing the cutting off of the power supply for operating the reception power amplifier 206 can be cited, and thus, the control of the radar device 200 for temporarily stopping the radar operation is possible by issuing one or more of these signals. In addition, the control for resuming the radar operation is possible by issuing a radar operation resuming signal that corresponds to the issued radar operation stoppage signal (that is to say, a transmission source resuming signal, a transmitting circuit power supply restarting signal, or a receiving circuit power supply restarting signal).

The radar device 200 is provided with the above-described movement determination unit 211 and stoppage controller 212 so that the receiving circuit of the radar device 200 can be protected from the input of an excessive reflected reception power without using a power attenuator which might become a factor for deteriorating the receiver noise figure.

Here, it is not necessary to temporarily stop the radar operation in the case where the detected object T is such an object that does not cause a problem even when it closely approaches the radar device 200 (object of which the reflected reception power is small such as a bird). In addition, it is not necessary to temporarily stop the radar operation in the case where it can be seen that the object T will not approach the radar device 200 very closely, judging from the direction in which the object T is moving. Therefore, it is preferable to determine whether or not the object T corresponds to the above-described conditions so that the radar operation is not temporarily stopped in the case where the object T corresponds to any of the above-described conditions. Whether or not the object T corresponds to the former conditions can be determined on the basis of the relationship between the reflected reception power (intensity of the received electromagnetic field) and the distance to the object (distance between the receiving antenna and the object T), for example. Whether or not the object T corresponds to the latter conditions can be determined on the basis of the positional relationship between the object T and the radar device 200 as well as the direction in which the object T is moving, for example.

In the following, the radar stoppage control in the present invention is more concretely described in reference to the examples.

EXAMPLE 1

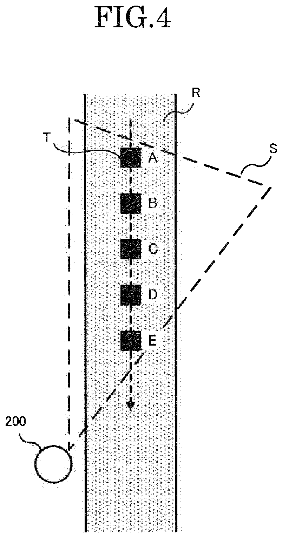

FIG. 4 is a diagram illustrating the radar stoppage control according to Example 1.

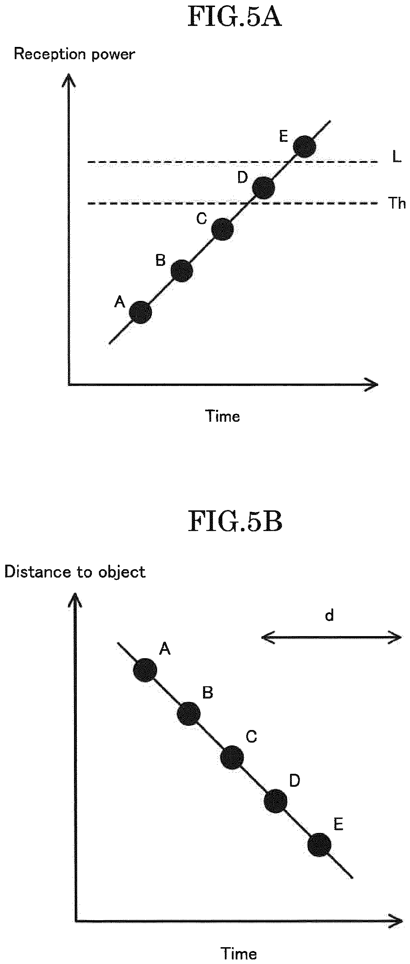

In Example 1, the radar device 200 does not rotate, and the detection range S by the radar device 200 is fixed. The radar device 200 monitors the predetermined route R, and thus, FIG. 4 shows a case where an object T that is moving linearly is detected. The object T is moving in the order of point A, point B, point C, point D and point E, and thus is gradually approaching the radar device 200. Here, FIG. 5A shows the change in the reflected reception power over time, and FIG. 5B shows the change of the distance to the object T over time. FIG. 5A is a graph where the horizontal axis indicates the time and the longitudinal axis indicates the reflected reception power. FIG. 5B is a graph where the horizontal axis indicates the time and the longitudinal axis indicates the distance to the object. Thus, the reflected reception power increases while the distance to the object shortens as the time elapses.

In the case where the object T moves linearly (constant direction) at almost a constant velocity, the location of the object T after a certain period of time has elapsed can be estimated on the basis of the radar detection results (the distance to the object T and the velocity of the object T). Here, in the case where the reception power limit is L as shown in FIG. 5A, for example, and the object T has reached the point E at which the reflected reception power exceeds the reception power limit L without any measures being taken, there is a risk of the receiving circuit being damaged by an excessive reflected reception power. Therefore, as shown in FIG. 5A, for example, a threshold value Th is set at a value that is smaller than the reception power limit L, and the radar device 200 issues a radar operation stoppage signal to the target apparatus at the point in time when the reflected reception power exceeds the threshold value Th so as to temporarily stop the radar operation. After that, the radar device 200 estimates the movement of the object T under the presupposition that the object T moves in the constant direction at a constant velocity, and resumes the radar operation at the time when the object T has passed the radar device 200 so as to move away therefrom by such a distance that the reflected reception power does not cause a problem. As a result, the radar operation is stopped during a certain period d when there is a risk of an excessive reception power flowing into the receiving circuit.

As described above, Example 1 provides a configuration where it is determined whether or not an object that has been detected within the detection range is a moving body in the case where the object has been detected by the radar device that does not rotate, and the radar operation of the radar device is stopped until the time calculated on the basis of the moving velocity of the object has elapsed from the point in time when the reception power reflected from the object exceeds the preset threshold value in the case where the object has been determined to be a moving body.

Here, the configuration may allow the maximum stoppage time of the radar operation to be calculated in advance on the basis of the lower limit value of the velocity that can be assumed for a moving body (reference value to be used for the determination of a moving body) so that the radar operation can be stopped until the maximum stoppage time has elapsed irrelevant of the actual moving velocity. Alternatively, the radar operation may be stopped at the point in time when the object is determined to be a moving body instead of the stoppage of the radar operation at the point in time when the reflected reception power exceeds the preset threshold value.

EXAMPLE 2

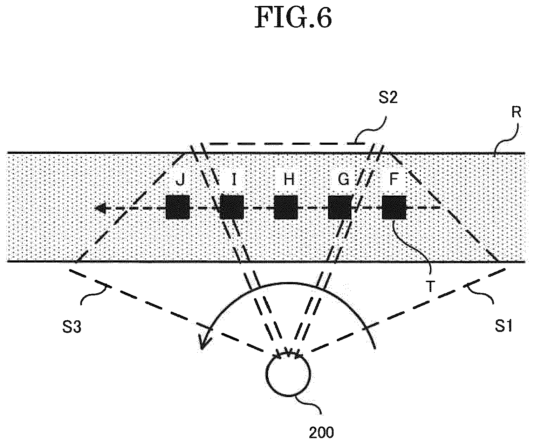

FIG. 6 is a diagram illustrating the radar stoppage control in Example 2.

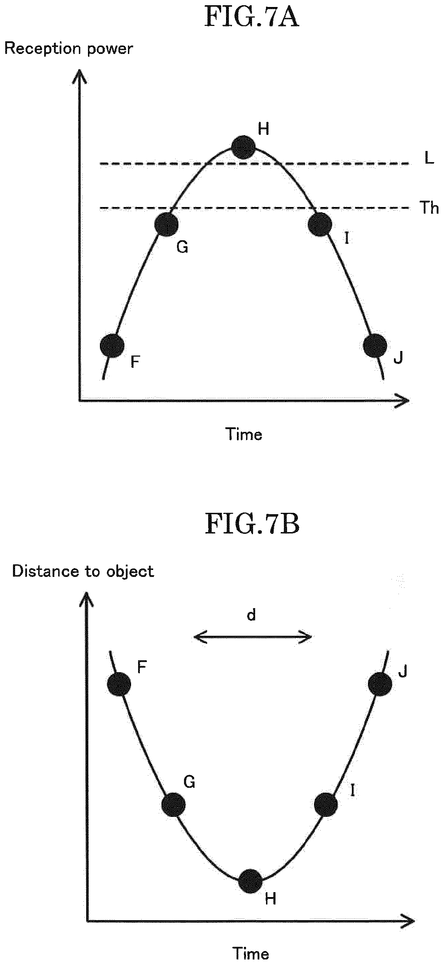

In Example 2, the radar device 200 rotates, and the detection range by the radar device 200 shifts counterclockwise in the order of S1, S2 and S3. The radar device 200 monitors the preset route R, and FIG. 6 shows a case where an object T that is moving linearly (in a constant direction) is detected. The object T moves in the order of point F, point G, point H, point I and point J, and thus is gradually moving away after it has approached the radar device 200. Here, FIG. 7A shows the change in the reflected reception power over time, and FIG. 7B shows the change in the distance to the object T over time. FIG. 7A is a graph where the horizontal axis indicates the time and the longitudinal axis indicates the reflected reception power. FIG. 7B is a graph where the horizontal axis indicates the time and the longitudinal axis indicates the distance to the object. Thus, the reflected reception power gradually increases and decreases after it has reached the peak, and the distance to the object gradually shortens and lengthens after it has reached the shortest distance as time elapses.

As shown in FIG. 7A, for example, in the case where the reception power limit is L and the object T has reached point H at which the reflected reception power exceeds the reception power limit L without any measures being taken, there is a risk of the receiving circuit being damaged by an excessive reflected reception power. Therefore, as shown in FIG. 7A, for example, a threshold value Th is set at a value that is smaller than the reception power limit L, and the radar device 200 issues a radar operation stoppage signal to the target apparatus at the point in time when the reflected reception power exceeds the threshold value Th so that the radar operation is temporarily stopped. After that, the radar device 200 estimates the movement of the object T under the assumption that the object T moves in a constant direction at a constant velocity, and thus resumes the radar operation at the time when the object T has passed the radar device 200 so as to move away therefrom by such a distance that the reflected reception power does not cause a problem. As a result, the radar operation is stopped during a certain period d when there is a risk of excessive reflected reception power flowing into the receiving circuit.

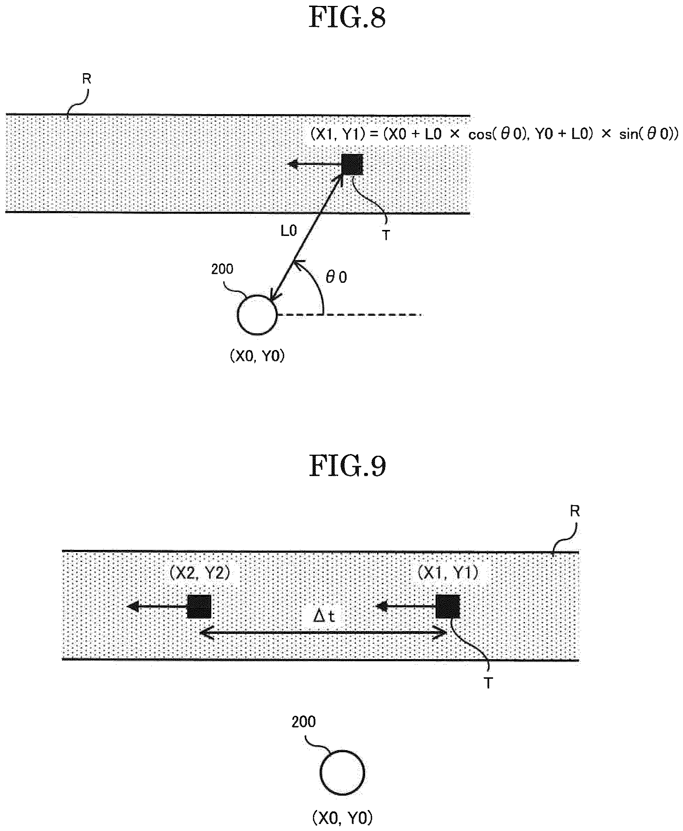

In the case where the radar device 200 rotates as described above, it is necessary to take into consideration the rotation angle and the rotation period of the radar device 200 in order to estimate the location of the object T. The rotating radar device 200 can specify the rotation angle and the distance to the object T at the moment when the moving object T is detected. At this time, the coordinates (X1, Y1) of the object T can be calculated in the following formula when the rotation angle at the time when the object T is detected is θ0 and the distance to the object is L0 as in FIG. 8, for example.

$$(X1, Y1) = (X0 + L0 \times \cos(\theta0), Y0 + L0 \times \sin(\theta0))$$

Here, (X0, Y0) are the coordinates of the radar device 200.

As shown in FIG. 9, in the case where the rotation period of the radar device 200 is Δt, it is assumed that the object that has been detected at the coordinates (X1, Y1) at a certain time has moved to the coordinates (X2, Y2) after Δt during which the radar device 200 has rotated once. At this time, the moving velocity ΔV of the object can be calculated in the following formula (2).

$$\Delta V = \text{sqrt}(\text{abs}(X2 - X1)^2 + (\text{abs}(Y2 - Y1)^2) \div \Delta t \ldots (2)$$

Here, "sqrt()" is a function for calculating the square root, and "abs()" is a function for calculating the absolute value. The location of the object T after a certain period of time has additionally elapsed can be estimated by finding the moving velocity ΔV as described above. As a result, the radar device 200 can calculate the time at which the object T has passed the radar device 200 so as to move away therefrom by such a distance that the reflected reception power does not cause a problem so that the radar operation can be stopped until then.

As described above, Example 2 provides a configuration where it is determined whether or not an object that has been detected within the detection range is a moving body in the case where the object has been detected by the radar device that rotates at a certain rotation period, and the radar operation of the radar device is stopped until the period of time calculated on the basis of the moving velocity of the object has elapsed from the point in time when the reception power reflected from the object exceeds the preset threshold value in the case where the object is determined to be a moving body.

Here, the maximum stoppage time of the radar operation may be calculated in advance on the basis of the lower limit value of the velocity that is assumed for a moving body (reference value to be used for the determination of a moving body), and thus, the radar operation may be stopped until the maximum stoppage time has elapsed irrelevant of the actual moving velocity. In addition, the radar operation may be stopped at the point in time when it is determined that the object is a moving body instead of the stoppage of the radar operation at the point in time when the reflected reception power exceeds the preset threshold value.

EXAMPLE 3

Though the radar device solely carries out the radar stoppage control in Example 1 and Example 2, according to the invention a plurality of radar device can cooperate with each other in order to carry out radar stoppage control. That is to say, a radar system having a plurality of radar devices may be constructed so that the entire system can share the individual radar detection results. As a result, a radar device that is installed in the moving direction of the moving object can be specified so that the radar operation thereof can be temporarily stopped.

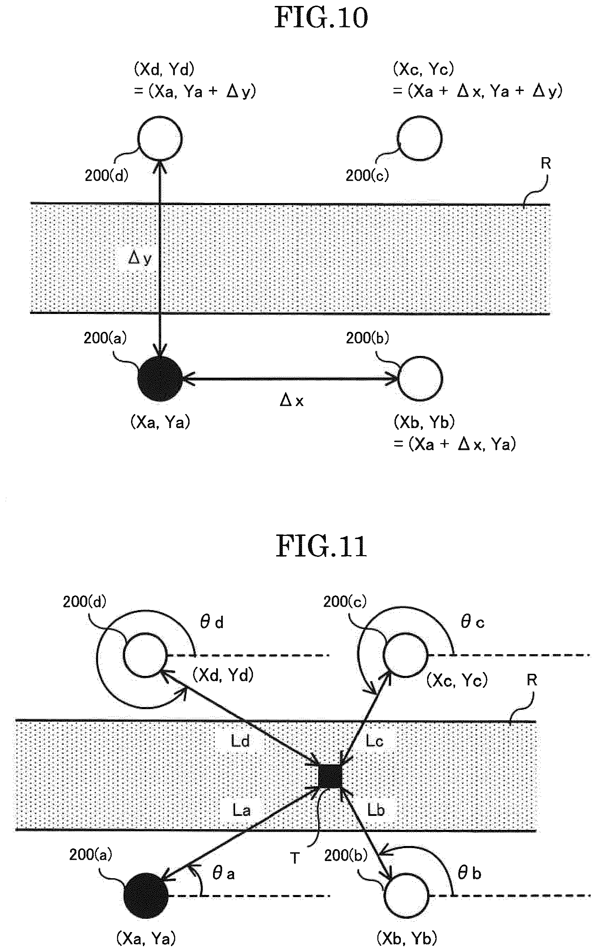

As shown in FIG. 10, Example 3 provides an arrangement of four radar devices 200(a) through 200(d) in total with two radar devices on either side with the route R along which the object T passes in between. The coordinates of the radar devices 200(a) through 200(d) are as follows.

Radar device 200(a): (Xa, Ya)
Radar device 200(b): (Xb, Yb)
Radar device 200(c): (Xc, Yc)
Radar device 200(d): (Xd, Yd)

In this case, the coordinates of each radar device 200 can be calculated as follows when the distances Δx and Δy between mutual radar devices in the arrangement are known. In the case where the coordinates (Xa, Ya) of the radar device 200(a) are known, for example, the coordinates of the other radar devices are uniquely determined.

Radar device 200(a): (Xa, Ya)
Radar device 200(b): (Xa + Δx, Ya)
Radar device 200(c): (Xa + Δx, Ya + Δy)
Radar device 200(d): (Xa, Ya + Δy)

In the case where an object T is moving along the route R as shown in FIG. 11, the rotation angles θa through θd and the distances to the object La through Ld are specified at the time when the object T is detected by the respective radar devices 200(a) through 200(d). At this time, the coordinates of the object T as viewed from each of the radar devices 200(a) through 200(d) can be represented as follows.

The coordinates of the object T as viewed from the radar device 200(a):

$$(X, Y) = (Xa + La × cos(θa), Ya + La × sin(θa))$$

The coordinates of the object T as viewed from the radar device 200(b):

$$(X, Y) = (Xb + Lb × cos(θb), Yb + Lb × sin(θb))$$
$$= (Xa + Δx + Lb × cos(θb), Ya + Lb × sin(θb))$$

The coordinates of the object T as viewed from the radar device 200(c):

$$(X, Y) = (Xc + Lc × cos(θc), Yc + Lc × sin(θc))$$
$$= (Xa + Δx + Lc × cos(θc), Ya + Δy + Lc × sin(θc))$$

The coordinates of the object T as viewed from the radar device 200(d):

$$(X, Y) = (Xd + Ld × cos(θd), Yd + Ld × sin(θd))$$
$$= (Xa + Ld × cos(θd), Ya + Δy + Ld × sin(θd))$$

As described above, it is possible for the entire radar system to share the coordinates of the moving object T that are found from the radar detection results of the respective radar devices 200(a) through 200(d) when one original point (Xa, Ya) and the distances Δx and Δy between the radar devices in the arrangement are known.

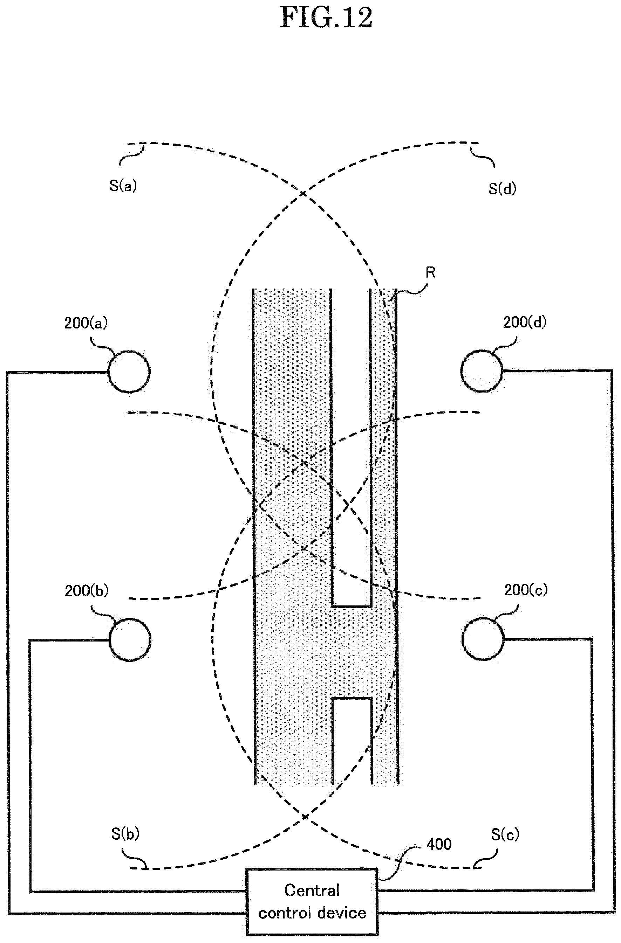

FIG. 12 shows an example of the configuration of the radar system according to Example 3.

In Example 3, four radar devices 200(a) through 200(d) in total that are arranged with the route R along which an object T passes in between are connected to a central control device 400. The radar devices 200(a) through 200(d) respectively have detection ranges Sa through Sd. The detection ranges Sa through Sd are provided so as to partially overlap each other. The radar detection results by the radar devices 200(a) through 200(d) are shared with each other via the central control device 400.

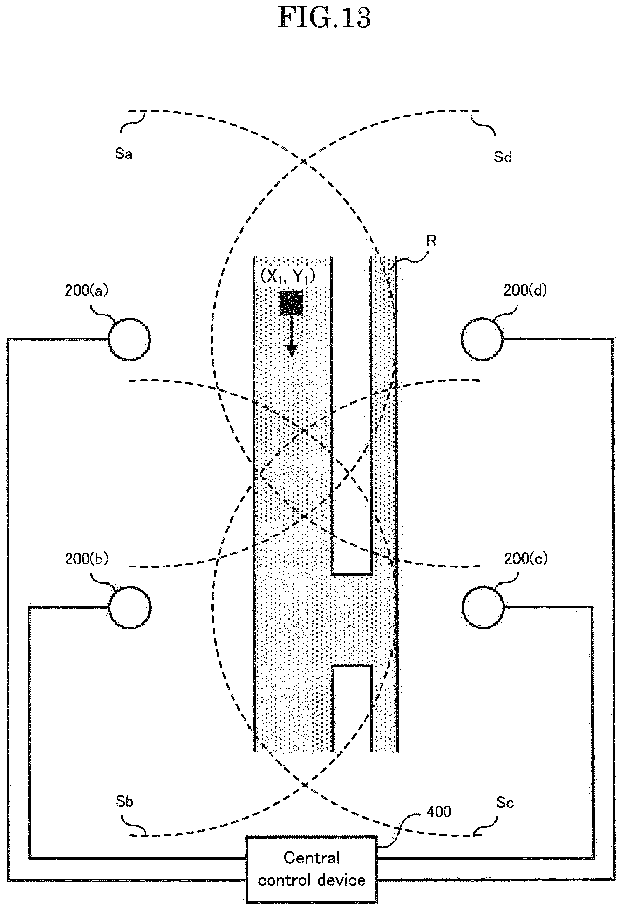

The radar stoppage control in the radar system having this configuration is described in reference to FIGS. 13 through 17.

FIG. 13 shows a case where an object T is located at the coordinates (X1, Y1), and the central control device 400 allows the coordinates (X1, Y1) of the object T to be shared by all the radar devices 200(a) through 200(d). In this case, it is determined that the object T is located in such a location that an excessive reflected reception power is not caused in any of the radar devices 200(a) through 200(d), and thus, the radar operations of all the radar devices 200(a) through 200(d) are turned ON.

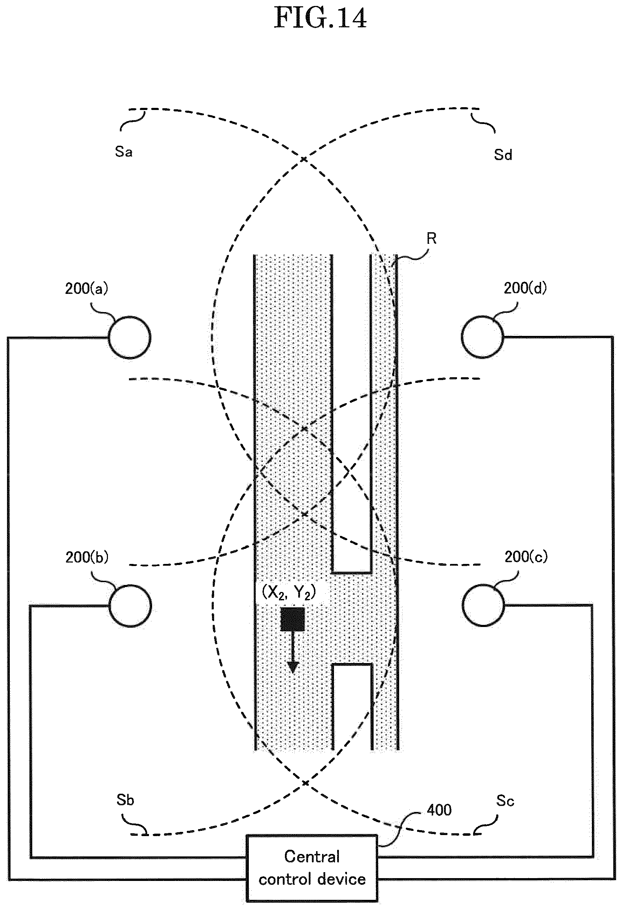

FIG. 14 shows a case where the object T is located at the coordinates (X2, Y2), and the central control device 400 allows the coordinates (X2, Y2) of the object T to be shared by all the radar devices 200(a) through 200(d). In this case as well, it is determined that the object T is located in such a location that an excessive reflected reception power is not caused in any of the radar devices 200(a) through 200(d), and thus, the radar operations of all the devices 200(a) through 200(d) are turned ON.

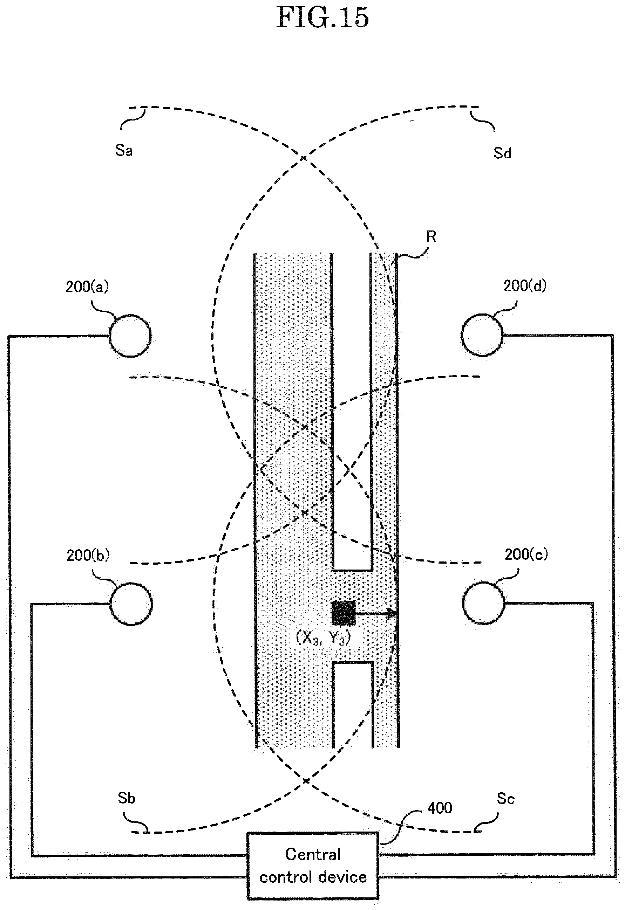

FIG. 15 shows a case where the object T is located at the coordinates (X3, Y3), and the central control device 400 allows the coordinates (X3, Y3) of the object T to be shared by all the radar devices 200(a) through 200(d). Here, it is assumed that it is determined that the object T is located in such a location that an excessive reflected reception power is caused in the radar device 200(c). In this case, the radar operation of the radar device 200(c) is turned OFF, whereas the radar operation of the other radar devices 200(a), 200(b) and 200(d) are turned ON.

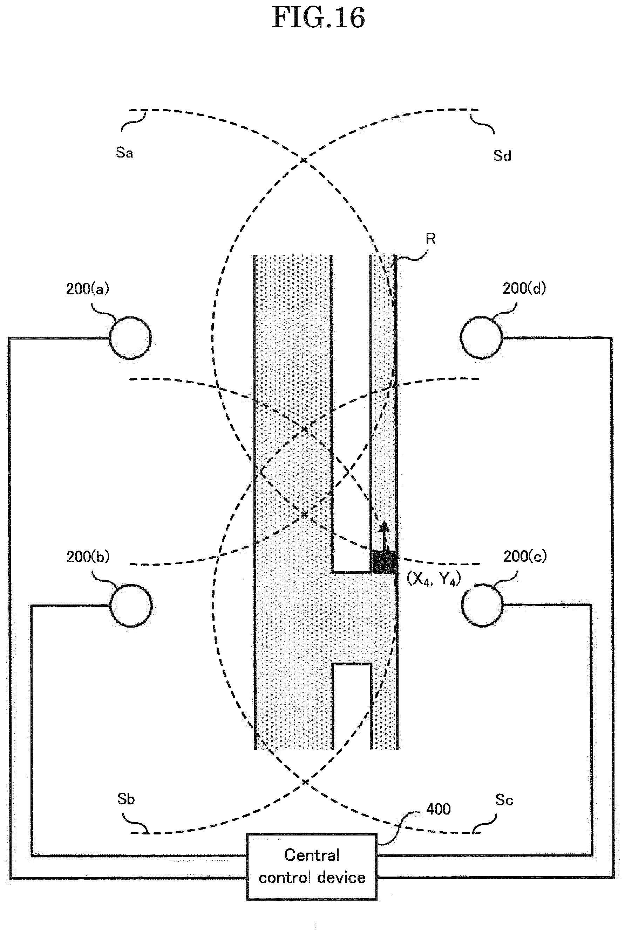

FIG. 16 shows a case where the object T is located at the coordinates (X4, Y4), and the central control device 400 allows the coordinates (X4, Y4) of the object T to be shared by all the radar devices 200(a) through 200(d). Here, it is assumed that it is determined that the object T is located in such a location that an excessive reflected reception power is caused in the radar device 200(c), and the object T is moving in such a direction as to approach the radar device 200(d). In this case, the radar operations of the radar devices 200(c) and 200(d) are turned OFF, whereas the radar operations of the other radar devices 200(a) and 200(b) are turned ON.

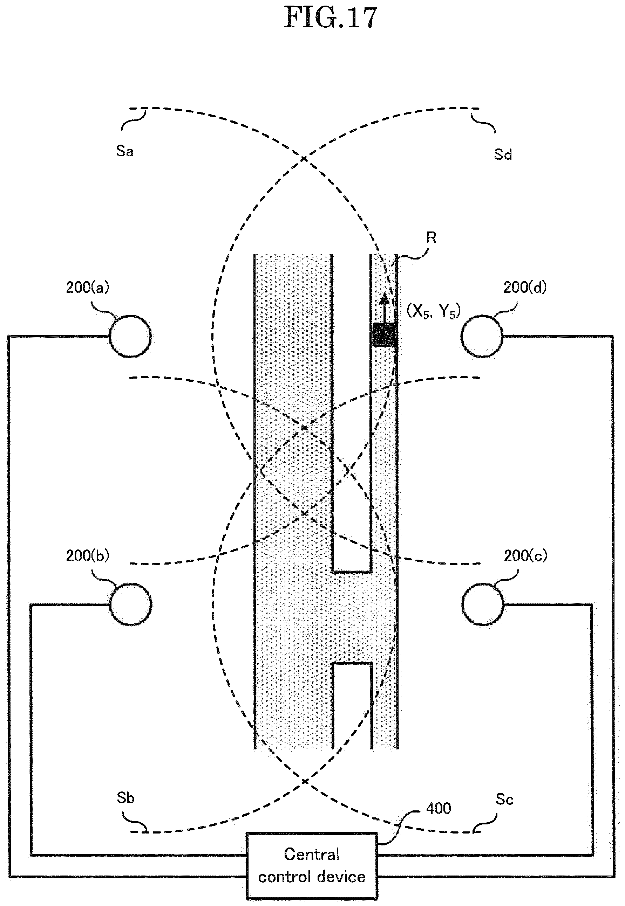

FIG. 17 shows a case where the object T is located at the coordinates (X5, Y5), and the central control device 400 allows the coordinates (X5, Y5) of the object T to be shared by all the radar devices 200(a) through 200(d). Here, it is assumed that it is determined that the object T is located in such a location that an excessive reflected reception power is caused in the radar device 200(d), and an excessive reflected reception power is not caused in the radar device 200(c). In this case, the radar operation of the radar device 200(d) is turned OFF, whereas the radar operation of the other radar devices 200(a), 200(b) and 200(c) are turned ON.

As described above in Example 3, the radar detection results are shared by a plurality of radar devices so that the location of an object that could possibly cause an excessive received reflected power can be shared by all the radar devices, and as a result, it becomes possible to temporarily stop the radar operation of the radar device having a risk of the object being approached by estimating the corresponding risk in advance.

The stoppage and the resumption of the radar operation of a target radar device can be controlled on the basis of the relationship between the radar device and the object. For example, the radar operation of a target radar device can be stopped at the point in time when an object enters within the stoppage range that is set with the location in which the target radar device is installed at the center, and the radar operation can be resumed at the point in time when the object exits to the outside of the stoppage range. The stoppage range may be preset for each radar device or may be calculated for each object on the basis of the radar detection results by each radar device. In the latter case, the range where the reflected reception power that is measured by the target radar device exceeds the preset threshold value (for example, the threshold value Th in Example 1 or Example 2) may be calculated as the stoppage range.

Such a radar stoppage control can be carried out by the radar device itself of which the radar operation is to be stopped on the basis of the radar detection results by other radar devices. In Example 1 and Example 2, the radar device operates individually, and thus, the location of a moving body cannot be specified during the stoppage of the radar operation; however, in Example 3, the location of a moving body can be specified even during the stoppage of the radar operation of a radar device on the basis of the radar detection results by the other radar devices.

In Example 3, each radar device controls itself for the temporary stoppage of the radar operation thereof on the basis of the radar detection results of other radar devices; however, such control for temporarily stopping the radar operation is not necessarily carried out by the radar device itself.

For example, a radar device for which it has been clarified that it is not necessary to stop the radar operation (for example, a radar device that is far away from the moving body) may specify the radar device that is installed in such a location that the object is approaching, and thus remotely controls the radar device so that the radar operation thereof is temporarily stopped.

Alternatively, a control device that is communicably connected to the respective radar devices may specify the radar device that is installed in such a location that the object is approaching, and thus remotely controls the radar device so that the radar operation thereof is temporarily stopped. The central control device 400 can be used for such a control device, for example. In this case, the central control device 400 may have functional units that correspond to the movement determination unit 211 and the stoppage controller 212.

EXAMPLE 4

In the above-described radar system, it becomes difficult for the entire system to share the location of a moving object that causes an excessive reflected reception power in the case where the radar device that is supposed to discover the object first is damaged.

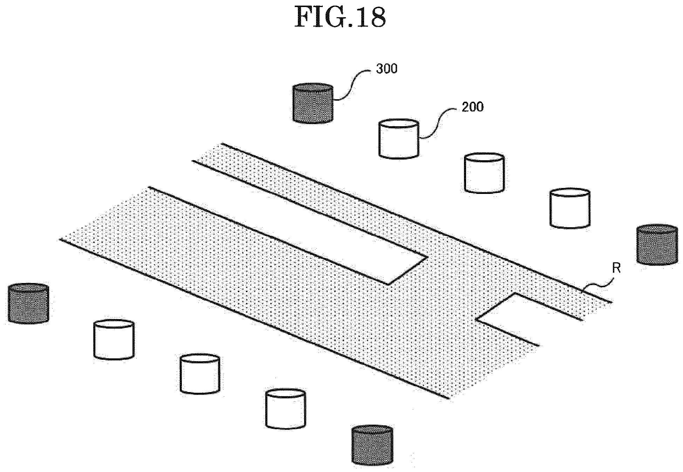

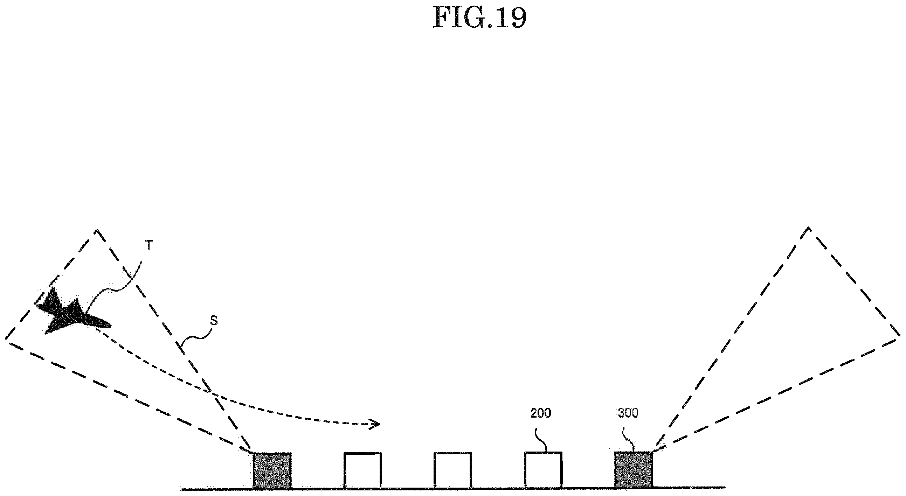

Therefore, according to the present invention in Example 4, a radar device of which the power withstanding performance is superior to the other radar devices (hereinafter, referred to as moving body detection radar device) is arranged in the position in which an object that causes an excessive reception power can be discovered first. FIGS. 18 and 19 are diagrams showing the radar arrangement in the radar system according to Example 4 as viewed from the top and as viewed in the horizontal direction.

In Example 4, as shown in FIG. 18, a moving body detection radar device 300 of which the power withstanding performance is superior to the radar device 200 is arranged on the upstream side relative to the radar device 200 along the route R through which an object T is assumed to move. In FIG. 18, it is assumed that an object T enters into the monitoring area of the radar system (area formed by overlapping the detection ranges of the respective radar devices) in any of four directions, and therefore, four moving body detection radar devices 300 are additionally installed in order to deal with this assumption. Here, one moving body detection radar device 300 may be enough, and thus, the number thereof is not limited in the present invention.

The radar detection results by the moving detection radar devices 300 are shared by the entire system via the central control device 400 in the same manner as the radar devices 200. That is to say, the control of a radar device 200 for the temporary stoppage of the radar operation thereof may be carried out by taking into consideration not only the radar detection results by the radar devices 200, but also the radar detection results by the moving body detection radar devices 300.

A moving body detection radar device 300 of which the power withstanding performance is superior is installed in such a location where an object that enters into the monitoring area of a radar system is discovered first, and therefore, the possibility of the receiving circuit in the moving body detection radar device 300 being damaged is low even when an object having a large reflected reception power enters, and thus, there is less concern that a problem may be caused in the radar stoppage control.

Here, as shown in FIG. 19, it is preferable for a moving body detection radar device 300 to be installed diagonally face the top in such an environment where an object that causes an excessive reflected reception power enters diagonally from the top. By doing so, the entrance of an object can be discovered at an early time.

Though in the above description the stoppage of the radar operation is planned to protect the receiving circuit, another method for solving the problem can be provided with radar devices where the degree of amplification by the transmission power amplifier or the reception power amplifier can be adjusted in such a manner that the degree of amplification is temporarily adjusted so as to be lowered in the case where an object that causes an excessive reflected reception power passes close to the radar device.

Here, the configurations of the system and the devices according to the present invention are not necessarily limited to those shown in the above, and various modifications may be used. For example, in the above-described configuration, radar devices are installed toward a runway of an airport; however, the present invention can be applied to a case where radar devices are installed toward a railroad track or a highway.

INDUSTRIAL APPLICABILITY

The present invention can be applied to a radar device for detecting an object that exists within a predetermined range on the basis of the results of reception of a reflected wave in response to a transmitted wave.

REFERENCE SIGNS LIST

100:    radar device

101:    FMCW transmission source
102:    power distributor
103:    transmission power amplifier
104:    transmitting antenna
105:    receiving antenna
106:    reception power amplifier
107:    mixer
108:    signal processing unit
109:    power attenuator
200:    radar device
201:    FMCW transmission source
202:    power distributor
203:    transmission power amplifier
204:    transmitting antenna

| 205: | receiving antenna |
|---|---|
| 206: | reception power amplifier |
| 207: | mixer |
| 210: | signal processing unit |
| 211: | movement determination unit |
| 212: | stoppage controller |
| 300: | radar device |
| 400: | central control device |

**Claims**

1. A radar system having a plurality of radar devices (200, 300) for detecting an object (T) that exists within a predetermined range on the basis of results of reception of a reflected wave in response to a transmitted wave, comprising: a determination unit (400) which determines whether or not the object (T) is a moving body on the basis of the results of reception by at least any of the radar devices (200, 300), **characterized by** the radar system comprising:

   a controller (400) which controls as a target a radar device that is installed in the moving direction of the object (T) so that the radar operation is temporarily stopped in the case where the determination unit has determined that the object (T) is a moving body, wherein
   the plurality of radar devices (200, 300) includes a moving body detection radar device (300) that is superior to other radar devices (200) in terms of the power withstanding performance, and
   the determination unit and the controller can carry out a process by using the results of reception by the moving body detection radar device (300).

2. The radar system according to claim 1, **characterized in that** the controller controls the target radar device so that the radar operation is temporarily stopped on the basis of the positional relationship between the object and the target radar device.

3. The radar system according to claim 1, **characterized in that** a control device which is connected to the plurality of radar devices in a communicable manner is provided with the determination unit and the controller.

4. The radar system according to claim 1, **characterized in that** the moving body detection radar device (300) is installed on the upstream side of the other radar devices (200) along the route (R) through which the object (T) is assumed to move.

**Patentansprüche**

1. Radarsystem mit einer Mehrzahl von Radarvorrichtungen (200, 300) zum Erkennen eines Objekts (T), das innerhalb eines vorbestimmten Bereichs existiert, auf der Grundlage von Ergebnissen des Empfangs einer reflektierten Welle als Reaktion auf eine übertragene Welle, umfassend:
   eine Bestimmungseinheit (400), die auf der Grundlage der Ergebnisse des Empfangs durch wenigstens eine der Radarvorrichtungen (200, 300) bestimmt, ob das Objekt (T) ein sich bewegender Körper ist oder nicht, **dadurch gekennzeichnet, dass** das Radarsystem umfasst:

   eine Steuervorrichtung (400), die als ein Ziel eine Radarvorrichtung steuert, die in der Bewegungsrichtung des Objekts (T) installiert ist, sodass der Radarbetrieb vorübergehend gestoppt wird, in einem Fall, in dem die Bestimmungseinheit bestimmt hat, dass das Objekt (T) ein sich bewegender Körper ist, wobei
   die Mehrzahl von Radarvorrichtungen (200, 300) eine Radarvorrichtung (300) für die Erkennung eines sich bewegenden Körpers beinhaltet, die anderen Radarvorrichtungen (200) in Bezug auf die der Leistung widerstehenden Leistung überlegen ist, und
   die Bestimmungseinheit und die Steuervorrichtung einen Vorgang unter Verwendung der Ergebnisse des Empfangs durch die Radarvorrichtung (300) für die Erkennung eines sich bewegenden Körpers durchführen.

2. Radarsystem nach Anspruch 1, **dadurch gekennzeichnet, dass** die Steuervorrichtung die Zielradarvorrichtung steuert, sodass der Radarbetrieb auf der Grundlage der Positionsbeziehung zwischen dem Objekt und der Zielradarvorrichtung vorübergehend gestoppt wird.

**3.** Radarsystem nach Anspruch 1, **dadurch gekennzeichnet, dass** eine Steuervorrichtung, die mit der Mehrzahl von Radarvorrichtungen auf eine kommunizierbare Weise verbunden ist, mit der Bestimmungseinheit und der Steuervorrichtung bereitgestellt wird.

**4.** Radarsystem nach Anspruch 1, **dadurch gekennzeichnet, dass** die Radarvorrichtung (300) für die Erkennung eines sich bewegenden Körpers auf der stromaufwärtigen Seite der anderen Radarvorrichtung (200) entlang der Route (R) installiert ist, von der angenommen wird, dass sich das Objekt (T) dadurch bewegt.

**Revendications**

**1.** Système radar ayant une pluralité de dispositifs radar (200, 300) pour détecter un objet (T) qui existe dans une portée prédéterminée sur la base des résultats de la réception d'une onde réfléchie en réponse à une onde transmise, comprenant :

un unité de détermination (400) qui détermine si oui ou non l'objet (T) est un corps en mouvement sur la base des résultats de la réception par au moins l'un quelconque des dispositifs radar (200, 300), **caractérisé par** le système radar comprenant :

un contrôleur (400) qui commande en tant que cible un dispositif radar qui est installé dans la direction de déplacement de l'objet (T) de sorte que le fonctionnement du radar est temporairement arrêté dans le cas où l'unité de détermination a déterminé que l'objet (T) est un corps en mouvement, dans lequel la pluralité de dispositifs radar (200, 300) comprend un dispositif radar de détection de corps en mouvement (300) qui est supérieur aux autres dispositifs radar (200) en termes de performance de résistance à la puissance, et l'unité de détermination et le contrôleur peuvent effectuer un procédé en utilisant les résultats de réception par le dispositif radar de détection de corps en mouvement (300).

**2.** Système radar selon la revendication 1, **caractérisé en ce que** le contrôleur contrôle le dispositif radar cible de sorte que le fonctionnement du radar est temporairement arrêté sur la base de la relation de position entre l'objet et le dispositif radar cible.

**3.** Système radar selon la revendication 1, **caractérisé en ce qu'**un dispositif de contrôle qui est connecté à la pluralité de dispositifs radar d'une manière communicante est pourvu de l'unité de détermination et du contrôleur.

**4.** Système radar selon la revendication 1, **caractérisé en ce que** le dispositif radar de détection de corps en mouvement (300) est installé en amont des autres dispositifs radar (200) le long de la route (R) par laquelle l'objet (T) est supposé se déplacer.

# FIG.1

# FIG.2

EP 3 644 089 B1

# FIG.3

EP 3 644 089 B1

# FIG.4

# FIG.5A

Reception power

Time

# FIG.5B

Distance to object

Time

# FIG.6

# FIG.7A

Reception power

Time

# FIG.7B

Distance to object

Time

# FIG.8

$(X1, Y1) = (X0 + L0 \times \cos(\theta 0), Y0 + L0) \times \sin(\theta 0))$

R

L0

T

200

$\theta 0$

(X0, Y0)

# FIG.9

R

(X2, Y2)

(X1, Y1)

$\Delta t$

T

200

(X0, Y0)

# FIG.10

(Xd, Yd)
= (Xa, Ya + Δy)

(Xc, Yc)
= (Xa + Δx, Ya + Δy)

200(d)

200(c)

R

Δy

200(a)

200(b)

Δx

(Xa, Ya)

(Xb, Yb)
= (Xa + Δx, Ya)

# FIG.11

200(d)

θd

200(c)

θc

(Xd, Yd)

(Xc, Yc)

R

Ld

Lc

La

Lb

200(a)

T

200(b)

θa

θb

(Xa, Ya)

(Xb, Yb)

# FIG.12

# FIG.13

# FIG.14

# FIG.15

# FIG.16

$(X_4, Y_4)$

200(a)  200(d)  200(b)  200(c)

Sa  Sd  Sb  Sc  R

400

Central
control device

# FIG.17

FIG.18

FIG.19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017018021 A1

- WO 02101411 A2